# EUROPEAN PATENT SPECIFICATION

(11) **EP 1 803 633 B1**
(45) Date of publication and mention of the grant of the patent: **24.09.2008**
(21) Application number: 06023154.5
(22) Date of filing: 07.11.2006
(51) Int. Cl.: B62J 17/04

(54) **Windshield system of saddle-ride type vehicle**
Windschutzscheibensystem eines Sattelfahrzeuges
Système de pare-brise pour véhicule du type à selle

(30) Priority: 27.12.2005 JP 2005376366
(43) Date of publication of application: 04.07.2007
(73) Proprietor: HONDA MOTOR CO., LTD., Tokyo 107-8556 (JP)
(72) Inventor: Shimada, Kazunori, Wako-shi, Saitama 351-0193 (JP); Uchida, Soya, Wako-shi, Saitama 351-0193 (JP); Sakamoto, Junichi, Wako-shi, Saitama 351-0193 (JP)
(74) Representative: Liska, Horst

(56) References cited:
- EP-A- 1 081 032
- EP-A- 1 495 954
- ES-A1- 2 235 559
- JP-A- 1 229 785

## Description

The present invention relates to a windshield system of a saddle-ride type vehicle for guiding running wind on the back side of a screen.

Some saddle-ride type vehicle represented by a motorcycle is provided with a screen (a windshield). However, the screen may cause wind noise and a measure for wind noise is demanded.

A windshield system to which a measure for wind noise is applied is proposed (for example, refer to JP-A No. 2005-28894 (Figs. 3 and 7).

In Fig. 7 in JP-A No. 2005-28894 a reference numeral 14 denotes an inner panel and reference numerals 14b denote protrudent portions integrated with the inner panel 14.

In Fig. 3 in JP-A No. 2005-28894EP 1495954, a reference numeral 15 denotes a screen arranged in front of the inner panel 14.

A part of running wind is taken in from the downside of the screen 15 and flows upward in space between the screen 15 and the inner panel 14. It is described in JP-A No. 2005-28894 that at this time, as the wind is commuted by the protrudent portions 14b, 14b, wind noise can be inhibited.

However, structure described in JP-A No. 2005-28894 has the following problems.

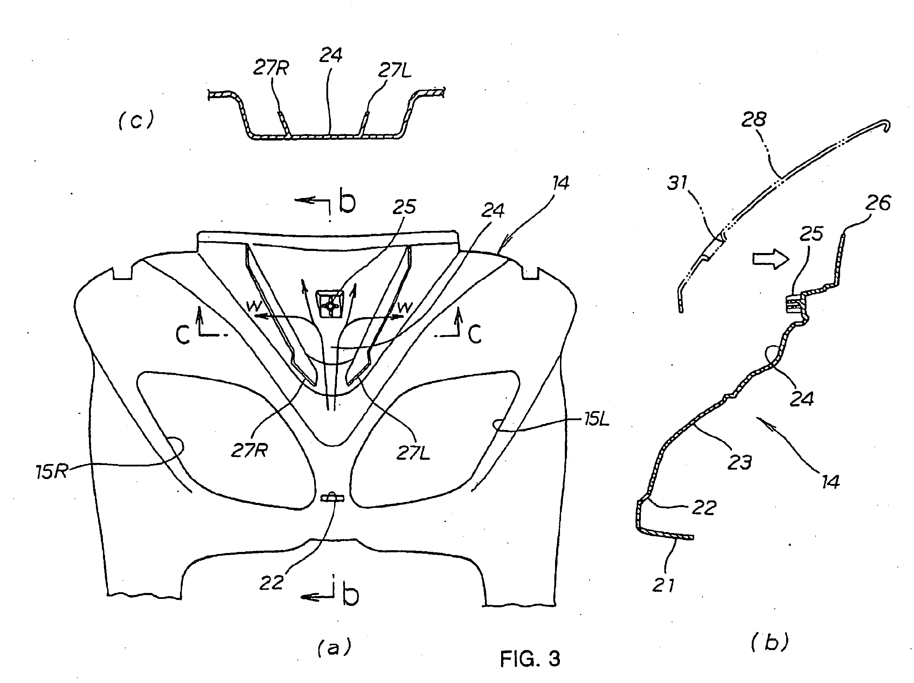

First, when a request for changing a form and a position of the protrudent portions 14b, 14b is made to rectify a flow, the whole inner panel 14 is required to be replaced. However, as shown in Fig. 3, the inner panel is large enough and as the part is costly, the replacement is a serious problem.

Second, as shown in Fig. 3, wind flowing along the back of the screen 15 includes only two-dimensional flows. However, when exact control over wind flowing along the back of the screen 15 is considered, control over three-dimensional flows has larger potential than that over two-dimensional flows. That is, the structure described in JP-A No. 2005-28894 has a limit in controllability over flows of wind.

The object of the invention is to provide a windshield system in which rectifying parts can be replaced at a small cost and three-dimensional flows can be produced.

The invention according to Claim 1 is based upon a windshield system of a saddle-ride type vehicle where a screen is provided to the front of a body, an intake port of running wind is provided on the downside of the screen and a wind guide passage is formed between the screen and the body so that the running wind taken from the intake port can be guided on the back side of the screen, and has such a first aspect that a guide member separate from the body and the screen in order to guide wind passing the intake port is arranged in the wind guide passage, and

the guide member is a plate member, and through holes are provided to the guide member so that a part of wind can flow at the back of the guide member.

Another embodiment according to Claim 2 has the aspect that the plate member is a member having a form widened toward the end along a flow of wind.

Another embodiment according to Claim 3 has the aspect that the body is a body cover and the guide member is arranged apart from the body cover.

Another embodiment according to Claim 4 has the aspect that the intake port is provided to the body cover.

In the invention according to Claim 1, the guide member is separate from the body and the screen. The guide members can be replaced without having an effect upon the body and the screen. As the separate member can be easily small-sized, the guide members can be replaced at a small cost,

the guide member is formed by the plate member. As the plate member is light and low-priced, a cost required for replacing the guide members can be further reduced.

According to Claim 2, the plate member has a form widened toward the end. Running wind taken from the intake port is widened in the form widened toward the end and can be guided on the back side of the screen. As a result, wind noise can be reduced and protection effect against wind (windshield action is produced by wind flowing on the back side of the screen and blown up from an upper end. The screen can be heightened) can be enhanced.

In the invention according to Claim 1, the through holes are provided to the guide member and a part of wind can flow at the back of the guide member. A flow of wind can be changed three-dimensionally by the guide member. As a result, various three-dimensional flows can be produced only by changing the size and a form of the through holes. The guide member enabling three-dimensional flows that enables wind noise to be reduced and enables protection effect against wind to be satisfactorily produced can be easily manufactured and can be simply attached in the vehicle.

According to Claim 3, the body is the body cover and the guide member is arranged apart from the body cover. The wind guide passage having large area can be secured between the body cover and the guide member by providing the guide member apart from the body cover.

According to Claim 4, the intake port is provided to the body cover. Wind taken from the intake port provided to the body cover can be smoothly guided into the wind guide passage having the large area described in Claim 5 by making the wind flow along the body cover. As flow resistance in the passage is small, a great deal of wind can be efficiently guided on the back side of the screen.

Referring to the attached drawings, a best embodiment of the invention will be described below. The drawings shall be viewed in a direction of reference numerals.
Fig. 1 is a front view showing a saddle-ride type vehicle according to the invention.
Fig. 2 is a sectional view taken along a line 2-2 shown in Fig. 1.
Figs. 3A and 3B are detail drawings showing a body front cover according to the invention.
Figs. 4A and 4B show the attachment of a meter visor according to the invention.
Figs. 5A and 5B show the attachment of a guide member according to the invention.
Fig. 6 shows the finish of the attachment of a screen and a garnish according to the invention.
Fig. 7 is a sectional view taken along a line 7-7 shown in Fig. 6.
Fig. 8 is an enlarged view showing a part 8 shown in Fig. 7.
Fig. 9 is a perspective view showing a guide member according to the invention.
Figs. 10A and 10B show the action of the guide member shown in Fig. 9.
Fig. 11 is a perspective view showing another guide member according to the invention.
Figs. 12A and 12B show the action of the guide member shown in Fig. 11.

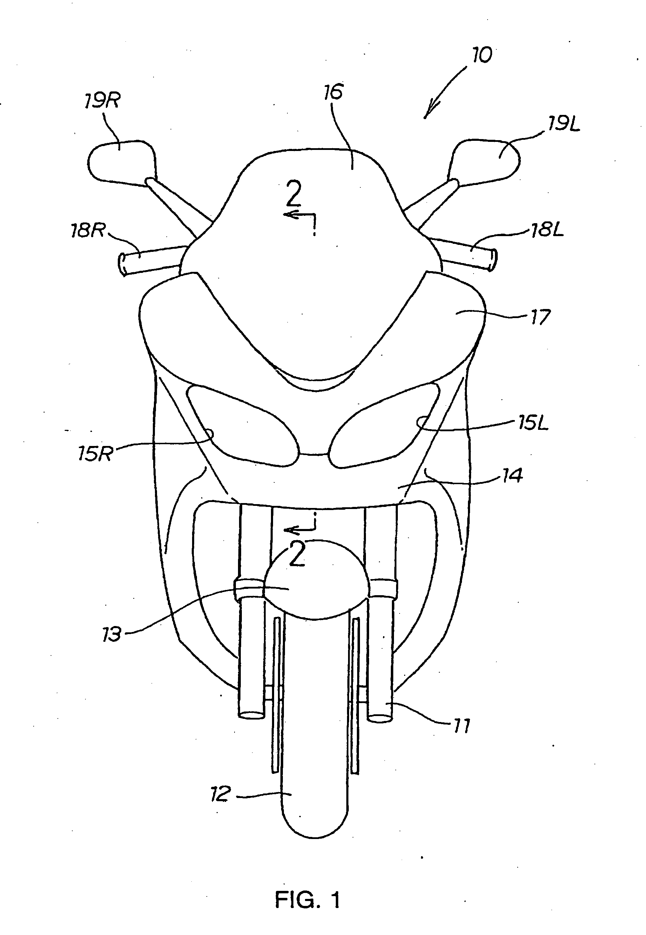

Fig. 1 is a front view showing a saddle-ride type vehicle according to the invention. The saddle-ride type vehicle 10 is a motorcycle where a front wheel 12 is provided on the downside of a front fork 11 so that the front wheel can be revolved, a front fender 13 for the front wheel 12 is provided to the front fork 11, the upside of the front fork 11 is covered with a body front cover 14, openings 15L, 15R (L denotes the left of a rider and R denotes the right) for left and right headlamps are provided to the body front cover 14, a screen 16 is extended upward from the body front cover 14, a V-type garnish 17 is laid between a lower edge of the screen 16 and each upper edge of the openings 15L, 15R for the left and right headlamps to enhance appearance quality and handlebar grips 18L, 18R and rear-view mirrors 19L, 19R are arranged at the back of the screen 16.

A vehicle of a type that a rider straddles a seat such as the motorcycle, for example, a scooter, a three-wheeled buggy, a four-wheel buggy is called a saddle-ride type vehicle.

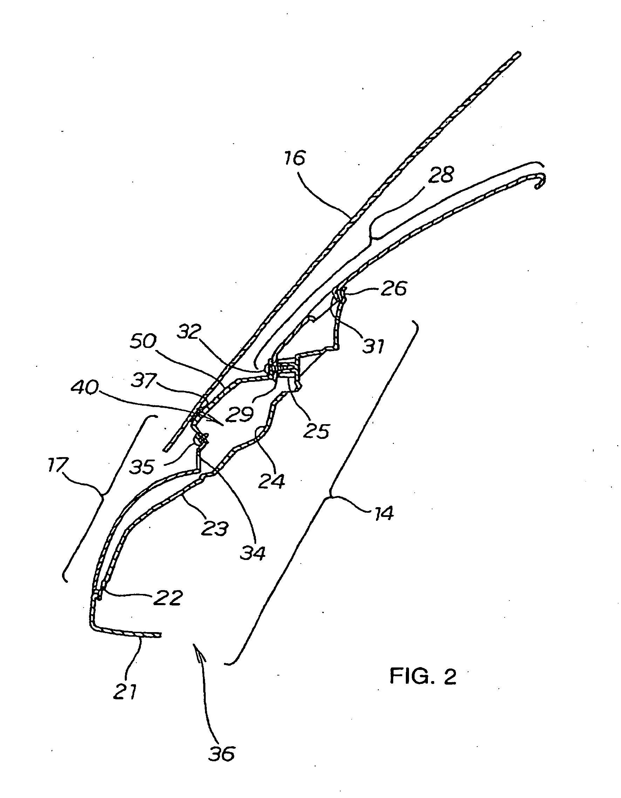

Fig. 2 is a sectional view taken along a line 2-2 shown in Fig. 1. The body front cover 14 includes a lower side part 21 bent backward (rightward in Fig. 2) substantially horizontally, a latch hole 22 made on the upside of the lower side part 21, a slanting side part 23 extended diagonally upward, a recessed portion 24 formed on the way of the slanting side part 23, a boss 25 extended forward (leftward in Fig. 2) from the slanting side part 23 on the upside of the recessed portion 24 and an upper edge 26. The body front cover 14 can be made of resin according to an injection molding method.

The upper edge 26 is covered with a meter visor 28 and a lower side part 29 of the meter visor 28 is put on the boss 25. The meter visor 28 is extended upward from the boss 25, however, a blowout hole 31 is provided between the boss 25 and the upper edge 26 of the body front cover 14.

The meter visor 28 is a sun screen member installed in front of meters. The visibility of the meters can be enhanced by providing the meter visor 28.

An upper end of a guide member 50 according to the invention is piled on the lower side part 29 of the meter visor 28 and they are screwed on the boss 25 by a locking screw 32.

The garnish 17 is provided with an intake port 34 of running wind in an upper part. A lower end of the garnish 17 is inserted into the latch hole 22 on the side of the body front cover 14, an upper end of the garnish 17 is piled on the guide member 50, and they are coupled by a locking screw 35.

The body front cover 14, the meter visor 28 and the garnish 17 respectively described above are components of a body cover 36. In this embodiment, the intake port 34 is provided to the garnish 17 of the body cover 36. The guide member 50 is installed with the guide member off the body front cover 14 of the body cover 36 forward (leftward in Fig. 2).

A lower part of the screen 16 is connected to the guide member 50 via an adhesive 37.

A passage from the intake port 34 to the blowout hole 31 is a wind guide passage 40 and in this embodiment, the wind guide passage 40 is configured by a part of the body front cover 14, a part of the garnish 17, the guide member 50 and a part of the meter visor 28.

Each form of the body front cover 14, the meter visor 28, the guide member 50 and the garnish 17 respectively described above and a procedure for assembly will be described in detail below.

Figs. 3 are detail drawings showing the body front cover according to the invention, Fig. 3A is a front view, Fig. 3B is a sectional view taken along a line b-b in Fig. 3A, and Fig. 3C is a sectional view taken along a line c-c shown in Fig. 3A.

As shown in Fig. 3A, the body front cover 14 is provided with the openings 15L, 15R for the left and right headlamps, the latch hole 22 and the boss 25. Left and right straightening vanes 27L, 27R are stood in a V type in the V-type recessed portion 24. The height of these straightening vanes 27L, 27R is reduced in a central part and the rear so that wind can flow in directions shown by arrows w (see Fig. 3C).

As shown in Fig. 3B, the body front cover 14 is a molding configured by the lower side part 21 bent backward (rightward in Fig. 3B) substantially horizontally, the latch hole 22 made on the upside of the lower side part 21, the slanting side part 23 extended diagonally upward, the recessed portion 24 formed on the way of the slanting side part 23, the boss 25 extended forward (leftward in Fig. 3B) from the slanting side part 23 on the upside of the recessed portion 24 and the upper edge 26.

The body front cover shown in Fig. 3A is provided with the recessed portion 24 in an upper part of the center. The recessed portion 24 is not a mere hollow but a large groove. That is, the recessed portion 24 forms a main part of the wind guide passage as shown in Fig. 3C. The straightening vanes 27L, 27R guide wind and produce rectification that wind is suitably distributed right and left.

Next, the meter visor 28 shown by an imaginary line in Fig. 3B is piled on the body front cover 14.

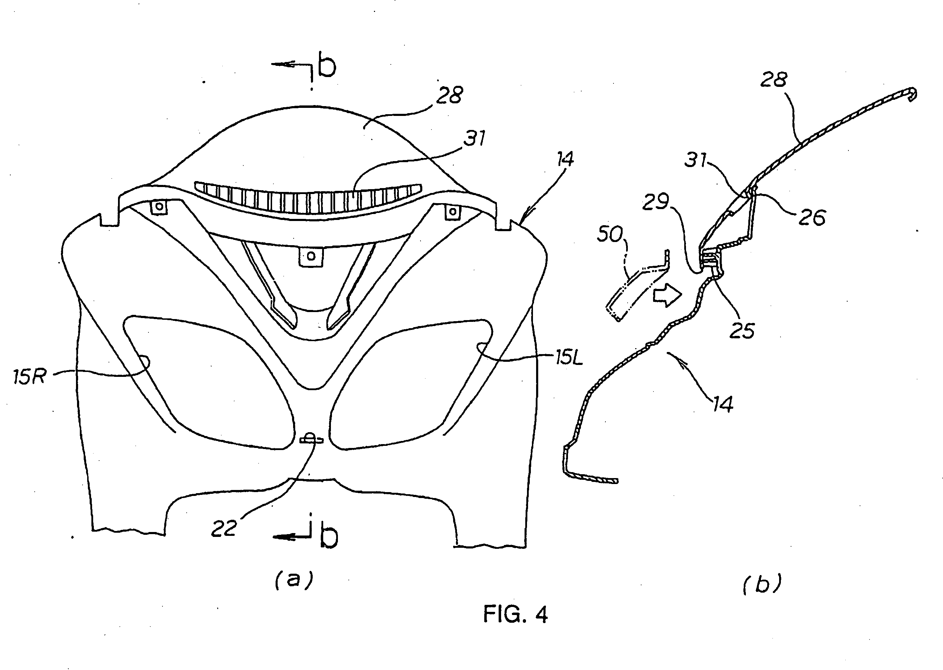

Figs. 4 show the attachment of the meter visor according to the invention, Fig. 4A is a front view, and Fig. 4B is a sectional view taken along a line b-b in Fig. 4A.

As shown in Fig. 4A, the meter visor 28 is long in a horizontal direction and is provided with multiple blowout holes 31 in a halfway part.

As shown in Fig. 4B, the upper edge 26 of the body front cover 14 is covered with the meter visor 28 and the lower side part 29 of the meter visor 28 is piled on the boss 25. The guide member 50 shown by an imaginary line is piled as shown by an outline arrow shown in Fig. 4B.

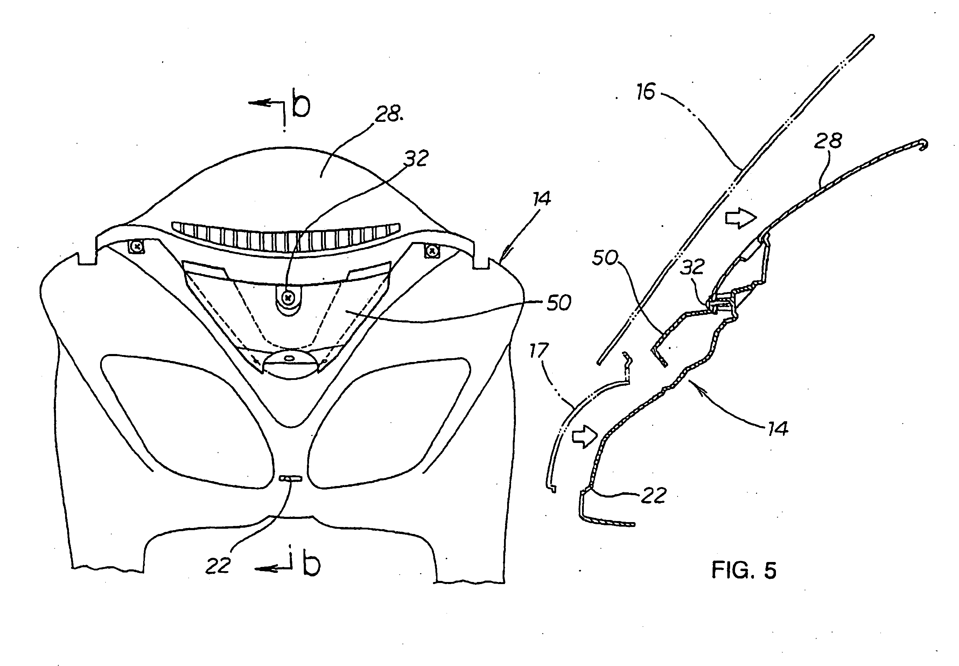

Figs. 5 show the attachment of the guide member according to the invention, Fig. 5A is a front view, and Fig. 5B is a sectional view taken along a line b-b shown in Fig. 5A.

As shown in Fig. 5A, the guide member 50 is a member having a form widened toward the end the lower side of which is shorter and the upper side of which is longer and also functions as a lid for closing the recessed portion 24 shown in Fig. 3C. The guide member 50 has two types of a type having a through hole and a type having no through hole. The details will be described later.

As shown in Fig. 5B, the screen 16 and the garnish 17 respectively shown by imaginary lines are respectively piled as shown by outline arrows in Fig. 5B.

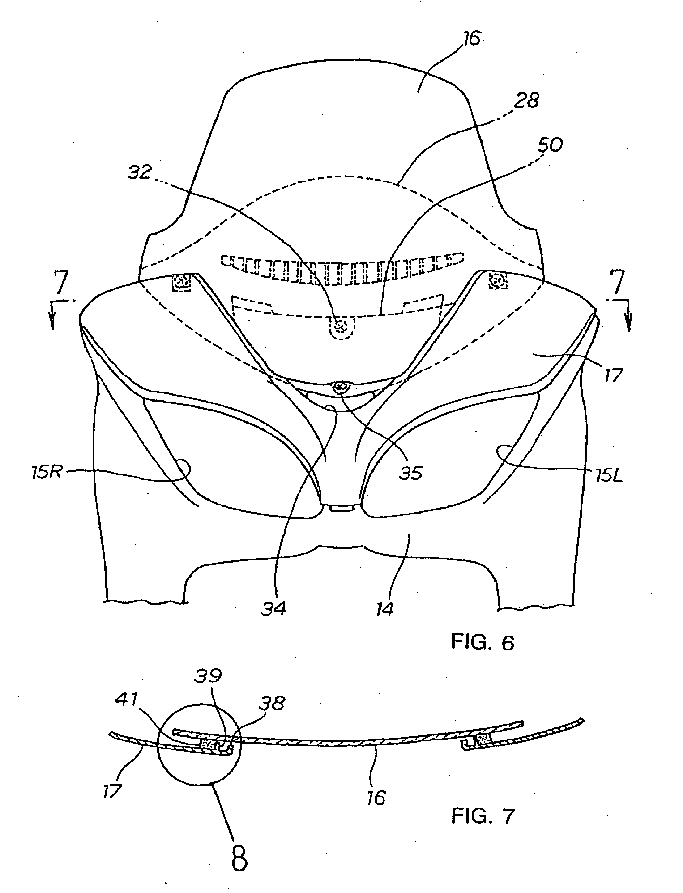

Fig. 6 shows the finish of the attachment of the screen and the garnish according to the invention and a sectional view is omitted because it is the same as that shown in Fig. 2.

The screen 16 is arranged behind the V-type garnish 17 having the intake port 34 on the upside of the center, and the guide member 50 and the meter visor 28 are arranged behind the screen 16.

Fig. 7 is a sectional view taken along a line 7-7 shown in Fig. 6 and shows that the left and right sides of the screen 16 are covered with the garnish 17.

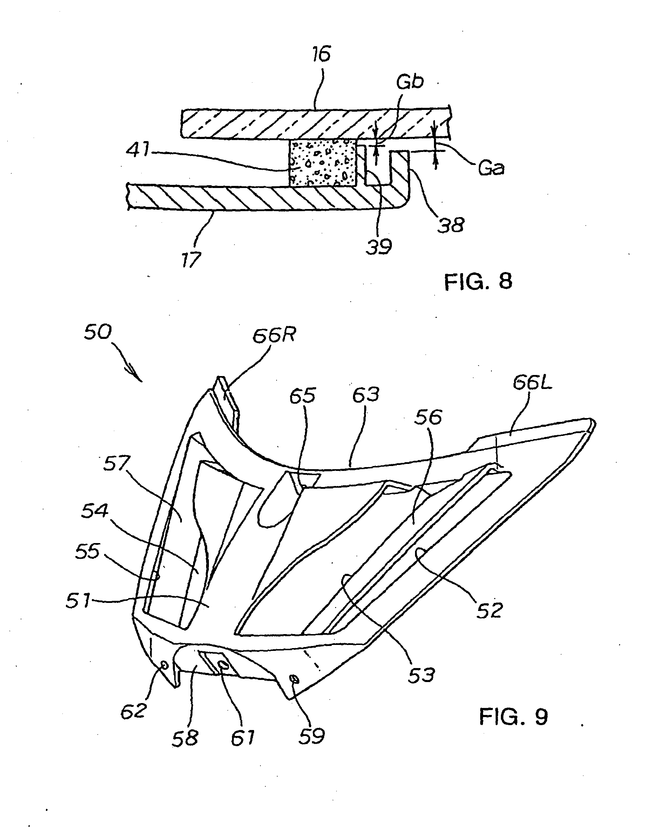

Fig. 8 is an enlarged view showing a part 8 shown in Fig. 7, a bent part 38 bent on the side of the screen 16 is provided at an edge of the garnish 17, and a rib 39 is stood inside the bent part 38.

The rib 39 is made longer than the bent part 38. When a gap between the bent part 38 and the screen 16 is Ga and a gap between the rib 39 and the screen 16 is Gb, Gb < Ga. When a sponge 41 also functioning as an adhesive is compressed, the bent part 38 is not hit on the screen 16 though the rib 39 is touched to the screen 16.

If the bent part 38 is hit on the screen 16, the screen 16 is scratched and the appearance quality is deteriorated. In the meantime, in the invention, the rib 39 functions as a stopper and prevents the bent part 38 from being hit on the screen 16. As a result, the appearance quality of the screen 16 can be kept satisfactory.

Next, the guide member according to the invention will be described in detail.

Fig. 9 is a perspective view showing the guide member according to the invention. The guide member 50 is a plate member in which thin plate parts are aggregated and is configured by a trapezoidal part 51 having a form widened toward the end, four through holes 52, 53, 54, 55 made in the trapezoidal part 51, a slanting vane 56 provided between the adjacent through holes 52, 53, a slanting vane 57 provided between the adjacent through holes 54, 55, tapped holes 59, 61, 62 provided to a narrower side 58 of the trapezoid, a tapped hole 65 provided to a wider side 63 of the trapezoid and left and right legs 66L, 66R.

The three tapped holes 59, 62, 65 are used for fixing the guide member 50. The residual tapped hole 61 is used for coupling the guide member and the garnish 17 (see Fig. 2).

The legs 66L, 66R are hit on the body front cover 14 (see Fig. 2) to position the guide member 50.

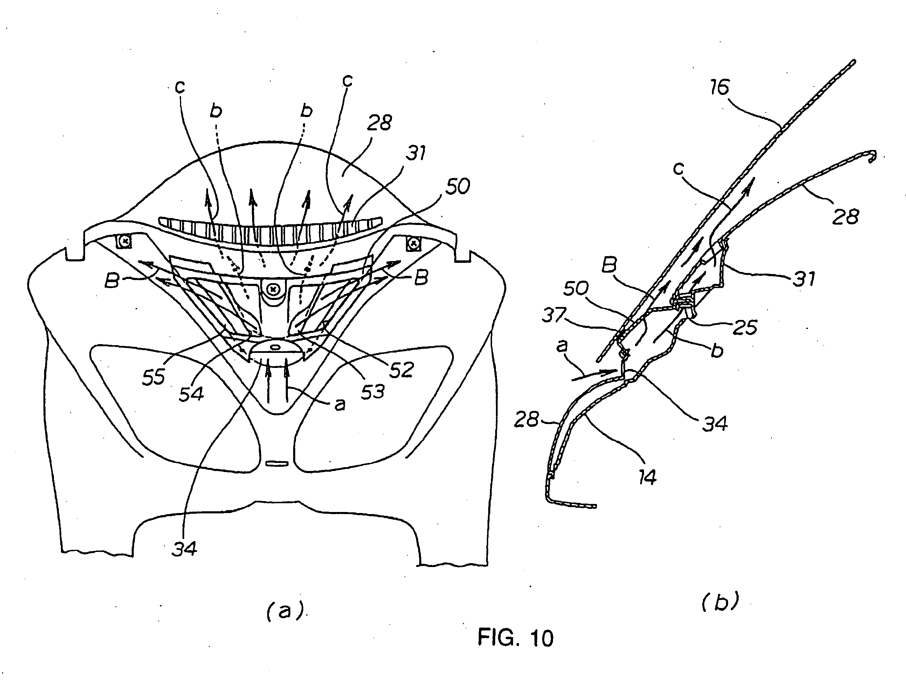

Figs. 10 show the action of the guide member shown in Fig. 9.

As shown in Fig. 10A, running wind enters the depth of the guide member 50 via the intake port 34 as shown by arrows "a" and a part flows to this side in the drawing through the through holes 52 to 55 as shown by arrows B, B. The rest of the running wind flows in the depth of the guide member 50 as shown by arrows "b", "b" and flows to this side in the drawing via the blowout holes 31 of the meter visor 28 as shown by arrows "c", "c".

That is, as shown in Fig. 10B, the running wind enters the depth of the guide member 50 via the intake port 34 as shown by the arrow "a" and a part flows on the side of the screen 16 through the through holes 52 to 55 (see Fig. 10A) as shown by the arrow B. A surface on the side of the screen 16 of the guide member 50 is called the back of the guide member 50. The rest of the running wind flows in the depth of the guide member 50 as shown by the arrow "b" and flows on the side of the screen 16 via the blowout hole 31 of the meter visor 28 as shown by the arrow "c" through the circumference of the boss 25. The arrow B and the arrow "c" join and the wind flows at the back of the screen 16.

The speed of the wind flowing at the back of the screen 16 increases when the arrows B increase. When the arrows B decrease and the arrows "c" increase, the thickness of the wind flowing at the back of the screen 16 increases. As described above, the flow of the wind can be kept suitable by dividing into the arrow B and the arrow "c" and controlling the wind three-dimensionally (in a direction of the width of the vehicle and in a running direction).

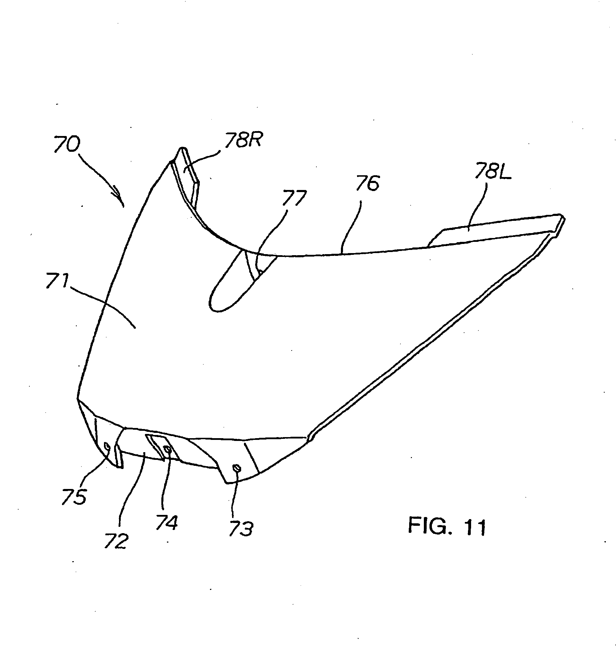

Fig. 11 is a perspective view showing another guide member according to the invention, a guide member 70 is a thin plate member and is configured by a trapezoidal part 71 having a form widened toward the end, tapped holes 73, 74, 75 provided to a narrower side 72 of the trapezoid, a tapped hole 77 provided to a wider side 76 of the trapezoid and left and right legs 78L, 78R.

The plate member is a thin plate member having a standing part at the edge of a flat plate or a curved plate and can be formed by injection molding in a relatively simple metallic mold. In the case of the plate member, the reduction of the weight and the cost can be easily achieved.

Three tapped holes 73, 75, 77 are used for fixing the guide member 70. A residual tapped hole 74 is used for coupling the guide member and the garnish 17 (see Fig. 2).

The legs 78L, 78R are touched to the body front cover 14 (see Fig. 2) to position the guide member 70.

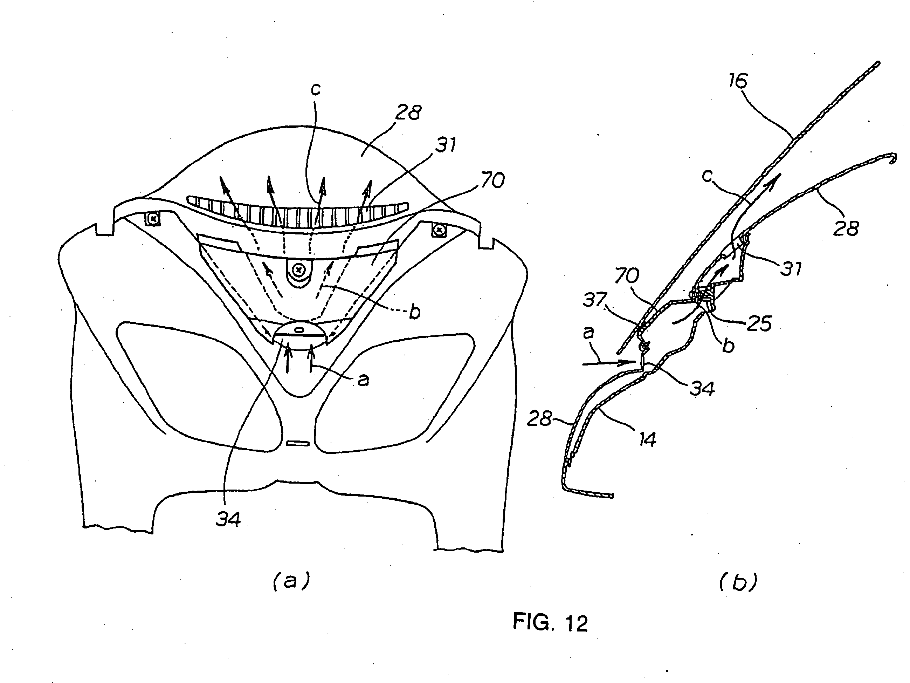

Figs. 12 show the action of the guide member shown in Fig. 11.

As shown in Fig. 12A, running wind enters the depth of the guide member 70 via the intake port 34 as shown by arrows "a", flows right and left as shown by arrows "b", flowing in the depth of the guide member 70, and flows on this side of the drawing through the blowout holes 31 of the meter visor 28 as shown by arrows "c".

That is, as shown in Fig. 12B, the running wind enters the depth of the guide member 70 via the intake port 34 as shown by the arrow "a", flows in the depth of the guide member 70 as shown by the arrow "b", passes the circumference of the boss 25, and flows on the side of the screen 16 through the blowout holes 31 of the meter visor 28 as shown by the arrow "c".

In Claim 7, it is described that a guide member can be integrated with the body or a screen.

The guide member may be also a cylindrical member in addition to the plate member. The guide member may be also branched into two or three in addition to the form widened toward the end.

Furthermore, as a vehicle called a naked vehicle is provided with no cowl (no body cover), a wind guide passage component such as a guide plate is provided on the side of the body. In this case, a wind guide passage is formed between the body and a screen. Therefore, the invention can be applied to both a vehicle provided with a cowl and a vehicle without a cowl.

The invention is ideal for a windshield system of a motorcycle.

The invention provides a windshield system that can produce three-dimensional flows.
In the invention, as shown in Fig. 10A, wind enters the depth of a guide member 50 via an intake port 34 as shown by arrows "a" and a part flows on this side in the drawing through through holes 52 to 55 as shown by arrows B, B. The rest of the wind flows in the depth of the guide member 50 as shown by arrows "b", "b" and flows on this side in the drawing through blowout holes 31 of a meter visor 28 as shown by arrows "c", "c". As shown in Fig. 10B, wind enters the depth of the guide member 50 via the intake port 34 as shown by the arrow "a" and a part flows on the side of a screen 16 through the through holes 52 to 55 as shown by the arrow B. The wind flows in the depth of the guide member 50 as shown by the arrow "b", passes the circumference of a boss 25, and flows on the side of the screen 16 through the blowout holes 31 of the meter visor 28 as shown by the arrow "c". The arrow B and the arrow "c" join and the wind flows at the back of the screen 16.
Therefore, the wind is divided into the arrow B and the arrow "c" and three-dimensional flows of the wind are controlled.

## Claims

1. A windshield system of a saddle-ride type vehicle (10) where a screen (16) is provided to the front of a body (14), an intake port (34) of running wind is provided on the downside of the screen (16) and a wind guide passage (40) is formed between the screen (16) and the body (14) so that the running wind taken from the intake port (34) can be guided on the back side of the screen (16), comprising:
a guide member (50, 70) separate from the body (14) and the screen (16) and arranged in the wind guide passage (40), in order to guide wind passing the intake port (34), wherein the guide member (50, 70) is a plate member,
**characterized in that**
through holes (52 to 55) are provided to the guide member (50) so that a part of wind can flow at the back of the guide member (50).

2. The windshield system of the saddle-ride type vehicle (10) according to Claim 1, wherein:
the plate member (50, 70) is a member having a form widened toward the end along a flow of wind.

3. The windshield system of the saddle-ride type vehicle (10) according to Claim 1 or 2, wherein:
the body (14) is a body cover (14); and
the guide member (50, 70) is arranged apart from the body cover (14).

4. The windshield system of the saddle-ride type vehicle (10) according to Claim 3, wherein:
the intake port (34) is provided to the body cover (14).

## Patentansprüche

1. Windschutzscheibensystem eines Fahrzeugs vom Sattelfahrtyp (10), bei dem eine Abschirmung (16) an der Vorderseite eines Körpers (14) vorgesehen ist, eine Fahrtwind-Einlassöffnung (34) an der Unterseite der Abschirmung (16) vorgesehen ist und ein Windleitdurchgang (40) zwischen der Abschirmung (16) und dem Körper (14) derart ausgebildet ist, dass von der Einlassöffnung (34) aufgenommener Fahrtwind zur Rückseite der Abschirmung (16) geleitet werden kann, umfassend:
ein Leitelement (50, 70), welches von dem Körper (14) und der Abschirmung (16) getrennt ist und in dem Windleitdurchgang (40) angeordnet ist, um die Einlassöffnung (34) passierenden Wind zu leiten, wobei das Leitelement (50, 70) ein Plattenelement ist,
**dadurch gekennzeichnet,**
**dass** Durchgangslöcher (52 bis 55) an dem Leitelement (50) derart vorgesehen sind, dass ein Teil des Winds zur Rückseite des Leitelements (50) strömen kann.

2. Windschutzscheibensystem des Fahrzeugs vom Sattelfahrtyp (10) gemäß Anspruch 1, wobei:
das Plattenelement (50, 70) ein Element ist mit einer längs einer Windströmung zum Ende hin breiter werdenden Form.

3. Windschutzscheibensystem des Fahrzeugs vom Sattelfahrtyp (10) gemäß Anspruch 1 oder 2, wobei:
der Körper (14) eine Körperabdeckung (14) ist; und das Leitelement (50, 70) getrennt von der Körperabdeckung (14) angeordnet ist.

4. Windschutzscheibensystem des Fahrzeugs vom Sattelfahrtyp (10) gemäß Anspruch 3, wobei:
die Einlassöffnung (34) an der Körperabdeckung (14) vorgesehen ist.

## Revendications

1. Système de pare-brise d'un véhicule du type à selle (10) où un écran (16) est prévu à l'avant d'un corps (14), un orifice d'admission (34) de l'air de déplacement est prévu en aval de l'écran (16) et un passage de guidage de vent (40) est formé entre l'écran (16) et le corps (14) de sorte que le vent de déplacement entré par l'orifice d'admission (34) puisse être guidé sur le côté arrière de l'écran (16), comprenant :
un élément de guidage (50, 70) séparé du corps (14) et de l'écran (16) et agencé dans le passage de guidage de vent (40), afin de guider le vent passant par l'orifice d'admission (34), dans lequel l'élément de guidage (50, 70) est un élément en forme de plaque,
**caractérisé en ce que**
des trous traversants (52 à 55) sont prévus dans l'élément de guidage (50) de sorte qu'une partie du vent puisse circuler à l'arrière de l'élément de guidage (50).

2. Système de pare-brise du véhicule du type à selle (10) selon la revendication 1, dans lequel :
l'élément en forme de plaque (50, 70) est un élément dont la forme s'élargit vers l'extrémité le long d'une circulation de vent.

3. Système de pare-brise du véhicule de type à selle (10) selon la revendication 1 ou 2, dans lequel :
le corps (14) est une carrosserie (14) ; et
l'élément de guidage (50, 70) est agencé à distance de la carrosserie (14).

4. Système de pare-brise du véhicule de type à selle (10) selon la revendication 3, dans lequel :
l'orifice d'admission (34) est prévu dans la carrosserie (14).
